# EUROPEAN PATENT APPLICATION

(11) **EP 2 385 451 A1**
(43) Date of publication of application: **09.11.2011**
(21) Application number: 10162349.4
(22) Date of filing: 07.05.2010
(51) Int. Cl.: G06F 3/048

(54) **Method for providing gui using pointer having visual effect showing that pointer is moved by gravity and electronic apparatus thereof**

(71) Applicant: Samsung Electronics Co., Ltd., Suwon-si, Gyeonggi-do 442-742 (KR)
(72) Inventor: Yoo, Ho-june, Seoul (KR); Choi, Sang-on, Gyeonggi-do (KR); Soh, Byung-seok, Gyeonggi-do (KR); Choi, Eun-seok, Gyeonggi-do (KR); Jang, Jong-hyuk, Gyeonggi-do (KR)
(74) Representative: D'Halleweyn, Nele Veerle Trees Gertrudis

(57) **Abstract**

A method for providing a graphical user interface (GUI) using a pointer having a visual effect showing that the pointer is moved by gravity is provided. If the pointer is determined to be placed on a first area, the pointer is moved according to user's manipulation, and if the pointer is determined to be placed on a second area, the pointer is moved to another position. Accordingly, convenience and entertainment are provided to the user who manipulates the pointer.

## Description

### CROSS-REFERENCE TO RELATED APPLICATIONS

This application claims priority from Korean Patent Application No. 10-2008-136612, filed on December 30, 2008, in the Korean Intellectual Property Office, the disclosure of which is incorporated herein by reference in its entirety.

### BACKGROUND OF THE INVENTION

### Field of the Invention

Apparatuses and methods consistent with the present invention relate to providing a graphical user interface (GUI), and more particularly, to providing a GUI which allows a user to select a desired GUI-component using a pointer.

### Description of the Related Art

A graphical user interface (GUI) through which a user selects a GUI-component, such as an icon or a menu displayed on a display using a pointer, is widespread. In order to input a command under such a GUI configuration, a user moves a pointer to a desired GUI-component using an input device such as a mouse or a touch pad, and commands a function allocated to the GUI-component on which the pointer is placed to be executed by pressing a predetermined button provided on the input device or touching the touch pad.

However, a user may experience an inconvenience when manipulating the pointer to be moved to a desired GUI-component using the input device, particularly, if the size of the display is big and the size of the GUI-component is small.

As a result, a more convenient way of manipulating the GUI is needed. Therefore, there is a demand for a method for a user to move a pointer to a desired GUI-component more easily.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

Aspects of the present invention provide a method for providing a GUI which uses a pointer having a visual effect showing that the pointer is moved by gravity on a display, thereby allowing a user to move the pointer to a desired GUI-component more easily, and an electronic apparatus employing the same.

An exemplary embodiment of the present invention provides a method for providing a GUI which does not allow a pointer to be moved to a GUI component which cannot be selected and an electronic apparatus employing the same.

Another aspect of the present invention provides a method for providing a GUI which makes it difficult to move a pointer to a predetermined area and an electronic apparatus employing the same.

According to an exemplary embodiment of the present invention, a method for providing a GUI comprises displaying a GUI-component and a pointer for indicating the GUI-component, and if the pointer enters the GUI-component, moving the pointer P toward a predetermined position of the GUI-component.

The method may further comprise, if the pointer enters an outer area of the GUI-component, moving the pointer toward the predetermined position of the GUI-component.

The predetermined position of the GUI-component may be one of a predetermined point of the GUI-component and a predetermined area of the GUI-component.

The GUI-component may be of a closed shape and the predetermined position may be a center of the closed shape.

The GUI-component may be a GUI-component that is selected by indicating the GUI-component with the pointer.

The GUI-component may be of a band shape and the predetermined position may be a center line or a center area of the band shape.

The center line or the center area may be a path along which the pointer is movable.

The moving operation may move the pointer toward the predetermined position of the GUI-component with a varying of a moving speed of the pointer.

The moving operation may vary the moving speed in a non-linear manner.

If there is a user's manipulation to move the pointer toward the predetermined position of the GUI-component when the pointer P is moved toward the predetermined position of the GUI-component, the moving operation may increase the moving speed.

The method may further comprise determining whether there is a user's manipulation to move the pointer away from the predetermined position of the GUI-component when the pointer is moved toward the predetermined position of the GUI-component, if it is determined that there is the user's manipulation, determining the degree of the user's manipulation, and, if the degree of the user's manipulation is less than a threshold, reducing the moving speed.

The method may further comprise determining whether there is user's manipulation to move the pointer away from the predetermined position of the GUI-component when the pointer is moved toward the predetermined position of the GUI-component, if it is determined that there is the user's manipulation, determining the degree of the user's manipulation, and, if the degree of the user's manipulation is greater than a threshold, moving the pointer according to the user's manipulation.

The method may further comprise determining whether there is a user's manipulation to let the pointer escape from the predetermined position, if it is determined that there is the user's manipulation, determining the degree of the user's manipulation, and, if the degree of the user's manipulation is less than a threshold, moving the pointer in the GUI-component according to the user's manipulation and then moving the pointer back to the predetermined position.

The method may further comprise determining whether there is a user's manipulation to let the pointer escape from the predetermined position, if it is determined that there is the user' manipulation, determining the degree of the user's manipulation, and if the degree of the user's manipulation is greater than a threshold, moving the pointer according the user's manipulation and moving the pointer out of the GUI-component.

The method may further comprise, if the pointer escapes from the GUI-component, moving the pointer toward a target GUI-component.

The target GUI-component may match with the GUI-component or one of other GUI-components except for the GUI-component, and may be determined based on the direction of the user's manipulation to let the pointer escape from the GUI-component.

Consistent with an aspect of the present invention, a method for providing a GUI comprises displaying a GUI-component and a pointer for indicating the GUI-component, and, if the pointer enters the GUI-component, moving the pointer outside of the GUI-component.

The method may further comprise, if the pointer enters an outer area of the GUI-component, moving the pointer outside of the GUI-component.

The GUI-component may be of a closed shape and may be a GUI-component that is not selected by indicating the GUI-component with the pointer.

The GUI-component may be of a band shape and may be separated by a center line or a center area of the band shape.

The moving operation may move the pointer outside of the GUI-component with a varying of a moving speed of the pointer.

The moving operation may vary the moving speed in a non-linear manner.

The method may further comprise determining whether there is a user's manipulation to let the pointer pass through the GUI-component, if it is determined that there is the user's manipulation, determining a degree of the user's manipulation, and, if the degree of the user's manipulation is less than a threshold, moving the pointer in the GUI-component according to the user's manipulation and then moving the pointer outside of the GUI-component.

The method may further comprise determining whether there is a user's manipulation to let the pointer pass through the GUI-component, if it is determined that there is the user's manipulation, determining the degree of the user's manipulation, and if the degree of the user's manipulation is greater than a threshold, moving the pointer to pass through the GUI-component.

Consistent with an aspect of the present invention, a method for providing a GUI comprises determining a position of a pointer, if the pointer is determined to be placed on a first area, performing a first moving operation to move the pointer according to a user's manipulation, and if the pointer is determined to be placed on a second area, performing a second moving operation to automatically move the pointer to another position.

The second moving operation may move the pointer to another position with a visual effect showing that the pointer is moved by a predetermined force.

The predetermined force may include at least one of gravity, magnetic force, and electric force.

Consistent with an aspect of the present invention, a method for providing a GUI comprises displaying a pointer, determining a current position of the pointer, and controlling a position of the pointer with reference to a map in which information about a position to which the pointer automatically moves is defined for each current position of the pointer.

Consistent with an aspect of the present invention, a method for providing a GUI comprises displaying a GUI-component and a pointer for indicating the GUI-component, and if the pointer enters an outer area of the GUI-component, moving the pointer to a predetermined position.

Consistent with an aspect of the present invention, a method for providing a GUI comprises displaying a GUI-component and a pointer for indicating the GUI-component, and if the pointer enters the GUI-component, moving the pointer regardless of a user's intention.

Consistent with another aspect of the present invention, an electronic apparatus comprises a GUI generator which generates a GUI on which a GUI-component and a pointer for indicating the GUI-component appear, and a controller which controls the GUI generator to move the pointer to a predetermined position of the GUI-component if the pointer enters the GUI-component.

Consistent with still another aspect of the present invention, an electronic apparatus comprises a GUI generator which generates a GUI on which a GUI-component and a pointer for indicating the GUI-component appear, and a controller which controls the GUI generator to move the pointer outside of the GUI-component if the pointer enters the GUI-component.

According to the present invention described above, the user can select a desired GUI-component more easily using the pointer with a visual effect showing that the pointer is moved on the display by gravity.

Also, since it is possible to prevent the pointer from moving to a GUI-component which cannot be selected, a user's convenience in manipulating the pointer increases and also the good visual effect and entertainment can be provided to the user.

Additional and/or other aspects and advantages of the invention will be set forth in part in the description which follows and, in part, will be obvious from the description, or may be learned by practice of the invention.

### BRIEF DESCRIPTION OF THE DRAWING FIGURES

The above and/or other aspects of the present invention will be more apparent by describing certain exemplary embodiments of the present invention with reference to the accompanying drawings, in which:

FIGS. 1 to 3 are views provided to explain a GUI to which exemplary embodiments of the present invention can be applied;

FIG. 4 is a view illustrating potential energy distribution in the GUI-component shown in FIG. 1;

FIGS. 5 to 7 are views illustrating examples of realizing a moving speed of a pointer P which moves toward the center of a GUI-component in a non-linear manner;

FIG. 8 is a view provided to explain a GUI on which a GUI-component of a straight band type appears;

FIG. 9 is a view illustrating potential energy distribution in the GUI-component shown in FIG. 8;

FIG. 10 is a view illustrating an example of realizing a moving speed of a pointer P which moves toward the center of a GUI-component in a non-linear manner;

FIG. 11 is a view provided to explain a GUI on which a GUI-component of a curved band type appears;

FIGS. 12 to 15 are views provided to explain a process of designing a GUI on which a plurality of GUI-components are arranged;

FIGS. 16 and 17 are views illustrating a pointer which escapes from a GUI-component and automatically enters another GUI-component;

FIG. 18 is a view illustrating a pointer which moves under a different condition from that of FIG. 1;

FIGS. 19 and 20 are views illustrating a pointer which is ultimately placed in the inner area of a GUI-component;

FIGS. 21 and 22 are views provided to explain another exemplary embodiment having a GUI to which the present invention can be applied;

FIG. 23 is a view illustrating potential energy distribution in the GUI-component shown in FIG. 21;

FIG. 24 is a view provided to explain a GUI on which a GU-component of a straight band type appears;

FIG. 25 is a view illustrating potential energy distribution in the GUI-component shown in FIG. 24;

FIG. 26 is a view illustrating a pointer which moves under a different condition from that of FIG. 21;

FIGS. 27 to 29 is views illustrating a broadcast receiving system to which the aforementioned GUI can be applied;

FIG. 30 is a block diagram illustrating a DTV and a remote controller which are provided in the broadcast receiving system; and

FIG. 31 is a flowchart illustrating a method for providing a GUI which uses a pointer having a visual effect showing that the pointer is moved by gravity consistent with an exemplary embodiment of the present invention.

### DETAILED DESCRIPTION OF THE EXEMPLARY EMBODIMENTS

Certain exemplary embodiments of the present invention will now be described in greater detail with reference to the accompanying drawings.

In the following description, the same drawing reference numerals are for the same elements even in different drawings. The matters defined in the description, such as detailed construction and elements, are provided to assist in a comprehensive understanding of the invention. Thus, it is apparent that the exemplary embodiments of the present invention can be carried out without those specifically defined matters. Also, well-known functions or constructions are not described in detail since they would obscure the invention with unnecessary detail.

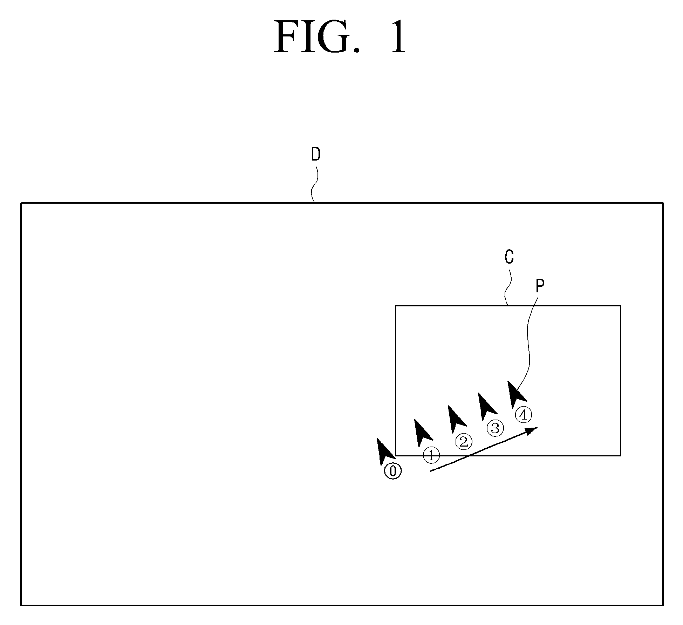

FIG. 1 is a view provided to explain a graphical user interface (GUI) to which an exemplary embodiment of the present invention can be applied. In FIG. 1, a display D on which a GUI is displayed is illustrated.

As shown in FIG. 1, a pointer P and a GUI-component C appear on the GUI. Only one GUI-component C is illustrated in FIG.1, but generally, a plurality of GUI-components is displayed on the GUI. FIG. 1 illustrates only one GUI-component C for the convenience of explanation.

The GUI-component C is a target that a user should select to (1) input a desired command, (2) execute a desired function, or (3) receive desired information, and includes a menu, an icon, a folder, and contents. Also, any element that can help a user select one of the aforementioned operations can be incorporated into the GUI-component C.

The pointer P is used for indicating and selecting a GUI-component C desired by the user. Once the pointer P enters the GUI-component C, the pointer P can be moved regardless of the user's intention. As used herein, the term "indicating" means to point to or point toward.

Although several pointers P are illustrated in FIG.1, it should be noted that it does not mean that the several pointers P appear together on the GUI. The several pointers P are illustrated in FIG. 1 only for the purpose of expressing the moving track of the pointer P. The numerals marked under the pointers P represent a moving order of the pointer P and are applied to the other drawings in the same way.

FIG. 1 illustrates the moving track of the pointer P when the pointer P enters the GUI-component C by a user's manipulation. More specifically, if the pointer P is moved in the sequence of ⊚ → by the user's manipulation and enters the GUI-component C, the pointer P automatically moves in the sequence of →②→③.

In FIG. 1, an arrow is marked under , , , and • The region marked by the arrow means a region in which the pointer P automatically moves. The arrow shown in FIG. 1 means that the movement → ② → ③ → of the pointer P is automatically achieved rather than by a user's manipulation and is applied to other drawings in the same way.

As shown in FIG. 1, the pointer P is ultimately placed in the center of the GUI-component C. Also, the user only moves the pointer P in the sequence of ⓪ → ①. The movement →②→③→ can be automatically achieved without a user's manipulation. Therefore, once the pointer P enters the GUI-component C, the pointer P automatically moves toward the center of the GUI-component C.

If the pointer P moves toward the center of the GUI-component C as described above, the user feels as if the pointer P automatically moves toward the center of the GUI-component C by gravity.

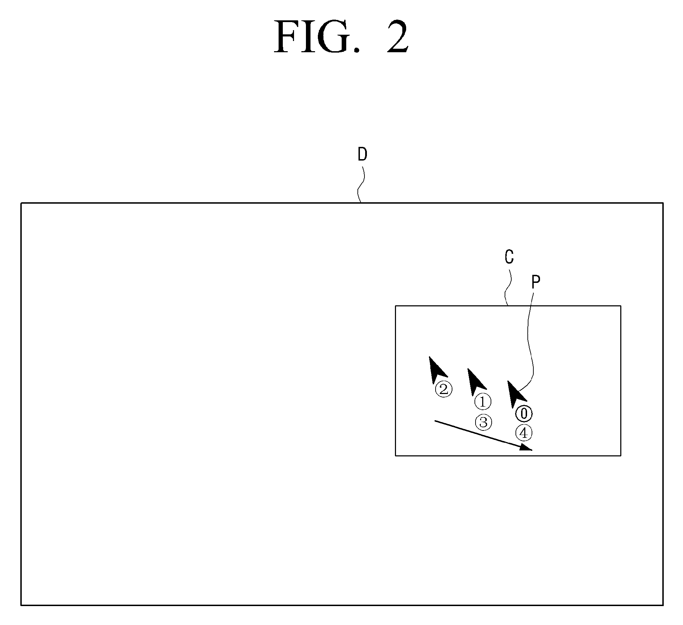

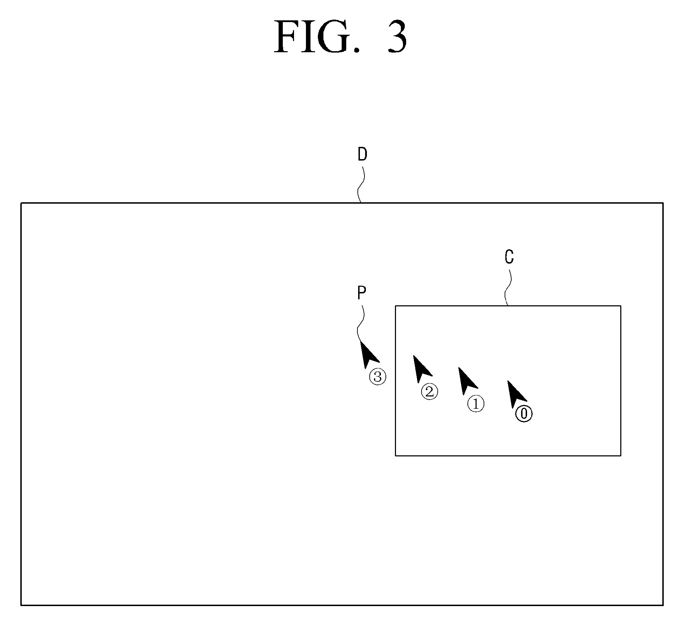

FIGS. 2 and 3 illustrate movement of a pointer P when there is a user's manipulation to move the pointer P, which is placed in the GUI-component C, to the outside of the GUI-component C.

More specifically, in FIG. 2, the user moves the pointer P in the sequence of ⓪→①→② but the pointer P automatically moves in the sequence of →③→ such that the pointer P cannot escape from the GUI-component C and returns to the center of the GUI-component C.

However, FIG. 3 illustrates a pointer which is moved in the sequence of → → → by a user's manipulation and ultimately escapes from the GUI-component C. Also, FIG. 3 illustrates the pointer P remaining outside the GUI-component C.

In FIG. 2, since the degree of a user's manipulation to move the pointer outside the GUI-component C, that is, to let the pointer P escape from the GUI-component C, is small (that is, since the degree of a user's manipulation is less than a threshold), the pointer P cannot move outside the GUI-component, that is, the pointer P cannot escape from the GUI-component C.

In FIG. 3, since the degree of a user's manipulation to move the pointer P outside the GUI-component C, that is, to let the pointer P escape from the GUI-component C is great (that is, since the degree of the user's manipulation is greater than a threshold), the pointer moves outside the GUI-component C, that is, escapes from the GUI-component C.

In the case of FIGS. 2 and 3, the user feels as if gravity is exerted toward the center of the GUI-component C.

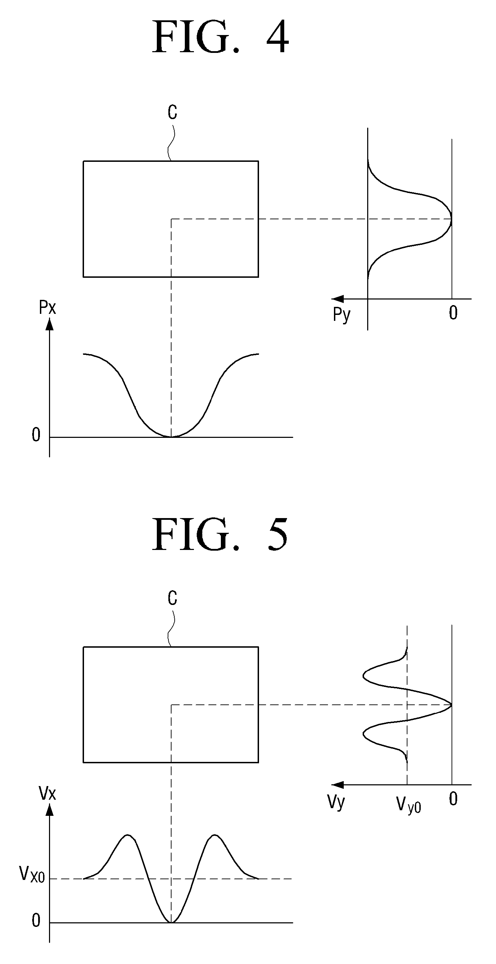

On the assumption that gravity is exerted toward the center of the GUI-component C, the potential energy in the GUI-component C due to gravity is distributed as shown in FIG. 4 and the pointer P moves from a point at which the potential energy is high and to a point at which the potential energy is low.

Referring to FIG. 4, the potential energy in the GUI-component C is lowest at the center of the GUI-component C and the potential energy for both the x-axis and the y-axis is "0". Accordingly, the pointer P ultimately moves toward the center of the GUI-component where the potential energy is lowest.

The speed of the pointer P which moves toward the center of the GUI-component C is determined according to the potential energy distribution in the GUI-component C. However, the moving speed of the pointer P does not necessarily correspond to the potential energy distribution in the GUI-component C. The speed of the pointer P which moves toward the center of the GUI-component C may be realized in a linear or non-linear manner.

FIGS. 5 to 7 illustrate examples in which the speed of the pointer P which moves toward the center of the GUI-component C is realized in a non-linear manner.

FIG. 5 illustrates the distribution of the moving speed of the pointer P in the GUI-component if the moving speed of the pointer P progressively increases when the pointer P enters the GUI-component C, reduces at any instant, and then reaches 0 at the center of the GUI-component C.

The moving speed (Vₓ₀, V_{y0}) of the pointer P at the time that the pointer enters the GUI-component C corresponds to the moving speed of the pointer P right before the pointer P enters the GUI-component C. This is to make the moving speed of the pointer P continuous at the boundary of the GUI-component C. Of course, it is possible to make the moving speed of the pointer P discontinuous in the GUI-component.

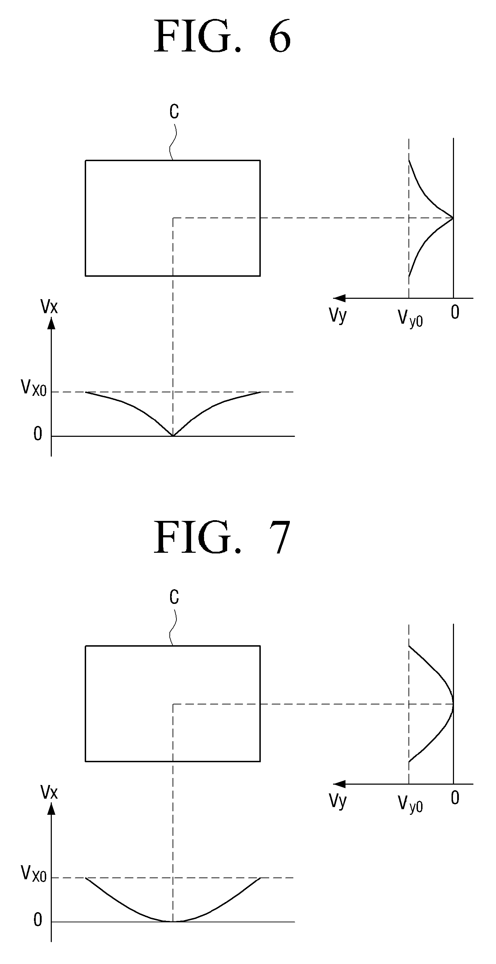

FIGS. 6 and 7 illustrate the distribution of the moving speed of the pointer P in the GUI-component C if the moving speed progressively decreases when the pointer P enters the GUI-component C and then reaches "0" at the center of the GUI-component C.

In this case, the moving speed (Vₓ₀, V_{y0}) of the pointer P at the time that the pointer P enters the GUI-component C corresponds to the moving speed of the pointer P right before the pointer P enters the GUI-component C.

The GUI-component C appearing on the GUI described above has a rectangular shape which is a closed shape and the pointer P automatically moves toward the center of the GUI-component C. Such a GUI-component C can be applied to an activated GUI-component, that is, a GUI component which can be selected by the user with the pointer P.

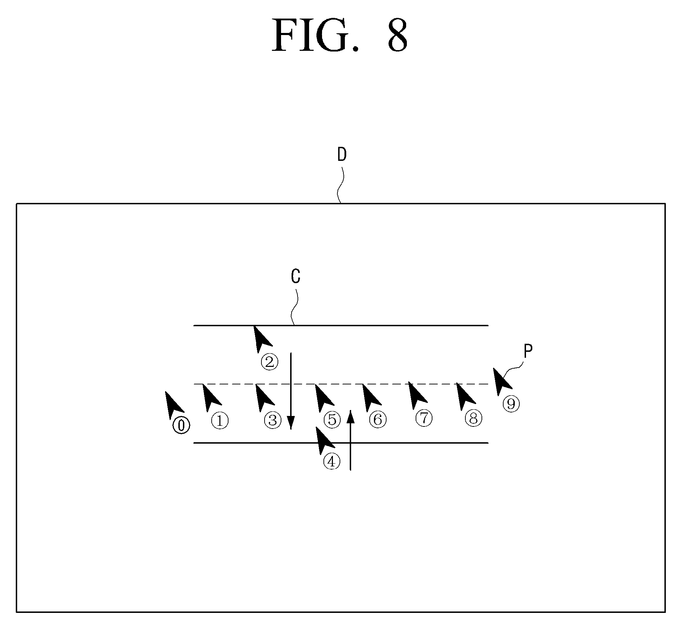

FIG. 8 illustrates a display D on which a GUI including a GUI-component C of another type which is different from that of FIG. 1 is displayed.

FIG. 8 illustrates the movement of a pointer P when the pointer P enters the GUI-component C by a user's manipulation. More specifically, FIG. 8 illustrates a GUI on which the pointer P stays in the center line of the GUI-component C.

As shown in FIG. 8, if the user moves the pointer P along the center line of the GUI-component C, the pointer P is moved according to a user's manipulation. For example, the pointer P is moved in the sequence of ⑤→⑥→⑦→⑧ by the user's manipulation.

However, if the pointer P escapes from the center line of the GUI-component C by a user's manipulation, the pointer P automatically returns to the center line of the GUI-component C. For example, if the pointer P is moved in the sequence of ① → ② by the user's manipulation, the pointer P automatically moves in the sequence of ② → ③, returning to the center line. Also, if the pointer P is moved in the sequence of ③ →④ by the user's manipulation, the pointer P automatically moves in the sequence of ④ → ⑤, returning to the center line.

Since the pointer P escaping from the center line of the GUI-component C automatically returns to the center line of the GUI-component C, the user feels as if the pointer P automatically moves toward the center line of the GUI-component C by gravity.

Of course, in FIG. 8, since the degree of a user's manipulation to move the pointer P outside the GUI-component C, that is, to let the pointer P escape from the GUI-component C, is small (that is, since the degree of the user's manipulation is less than a threshold), the pointer P cannot be moved to the outside of the GUI-component C, that is, cannot escape from the GUI-component C.

If the degree of a user's manipulation to move the pointer P to the outside of the GUI-component C, that is, to let the pointer P escape from the GUI-component C, is great (if the degree of the user's manipulation is greater than a threshold), the pointer P can be moved to the outside of the GUI-component C, that is, can escape from the GUI-component C.

In the case of FIG. 8, the user feels as if gravity is exerted toward the center line of the GUI-component C and the pointer P moves toward the center line of the GUI-component C by gravity.

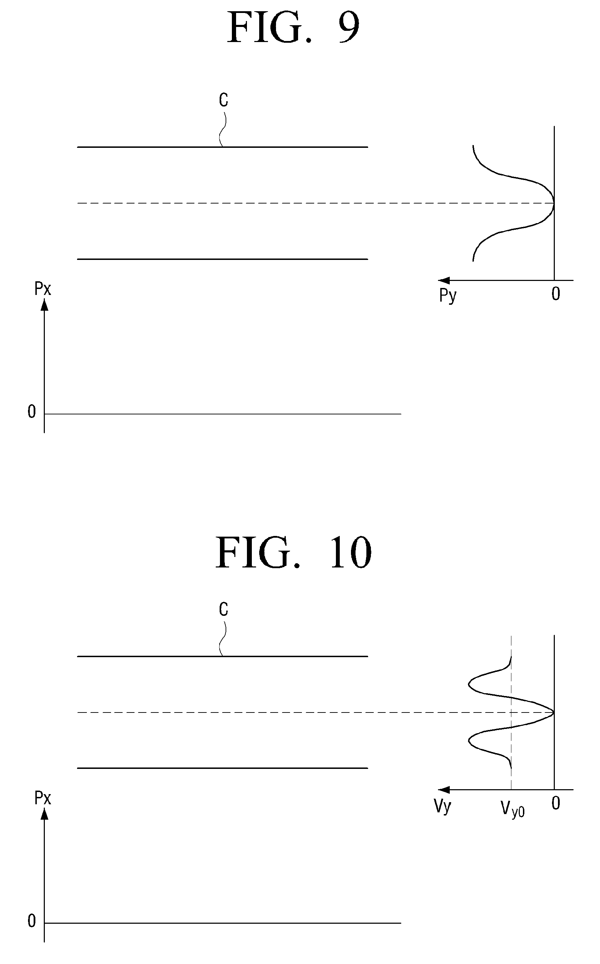

On the assumption that gravity is exerted toward the center line of the GUI-component C as described above, the potential energy in the GUI-component C due to gravity is distributed as shown in FIG. 9 and the pointer P is moved from a point where the potential energy is high to a point where the potential energy is low.

Referring to FIG. 9, the potential energy with respect to the x-axis in the GUI-component C is "0" over all the points. Also, the potential energy with respect to the y-axis in the GUI-component C is lowest at the center line of the GUI-component C, that is, is "0" at the center line. Therefore, the pointer P ultimately moves toward the center line where the potential energy is lowest.

The moving speed of the pointer P which returns to the center line after escaping from the GUI-component C is determined according to the distribution of the potential energy in the GUI-component C. However, the moving speed of the pointer P does not necessarily correspond to the distribution of the potential energy in the GUI-component C. That is, the moving speed of the pointer P which returns to the center line after escaping from the center line of the GUI-component C may be realized in a linear or a non-linear manner.

FIG. 10 illustrates an example in which the moving speed of the pointer P which returns to the center line after escaping from the center line of the GUI-component C is realized in a non-linear manner.

FIG. 10 illustrates the distribution of the moving speed of the pointer P which moves toward the center line when the pointer P escapes from the center line of the GUI-component C, wherein the speed progressively increases, decreases at any instant, and then reaches "0" at the center line of the GUI-component C.

The GUI-component C appearing on the GUI described above is a straight band shape and is a GUI-component that induces the pointer P to move along the center line of the GUI-component C.

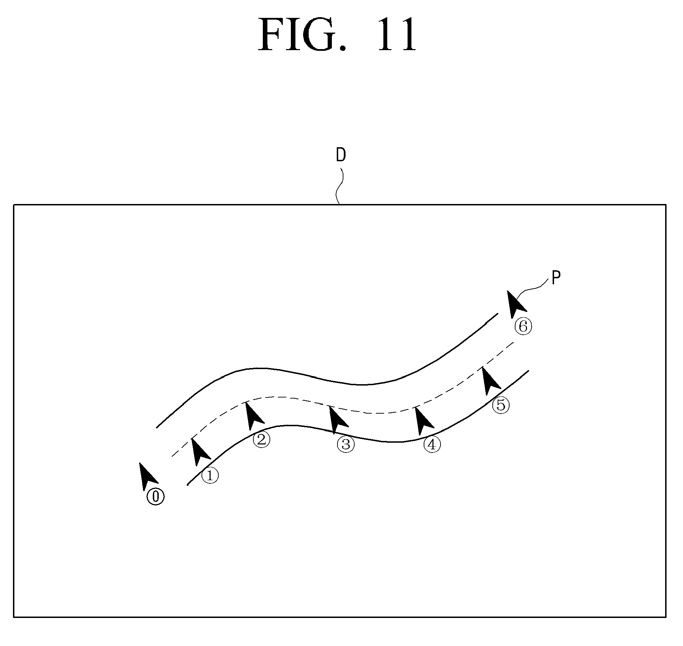

FIG. 11 illustrates a GUI-component C of a curved band shape. The GUI-component C shown in FIG. 11 induces the pointer P to move in the sequence of ① → ② → ③ → ④ → ⑤ along the center line of the curved band.

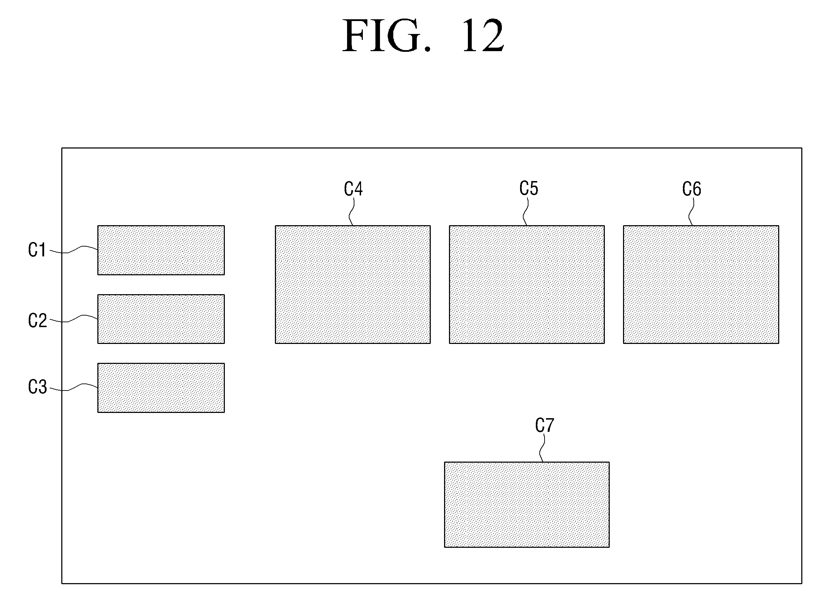

FIG. 12 illustrates a display C on which a GUI having a plurality of GUI-components C1 to C7 is displayed. The GUI-components C1 to C7 arranged on the GUI shown in FIG. 12 are displayed on the display D so that they can be viewed by the user with his/her eyes. Also, the user selects one of the GUI-components C1 to C7 by placing the pointer P on it.

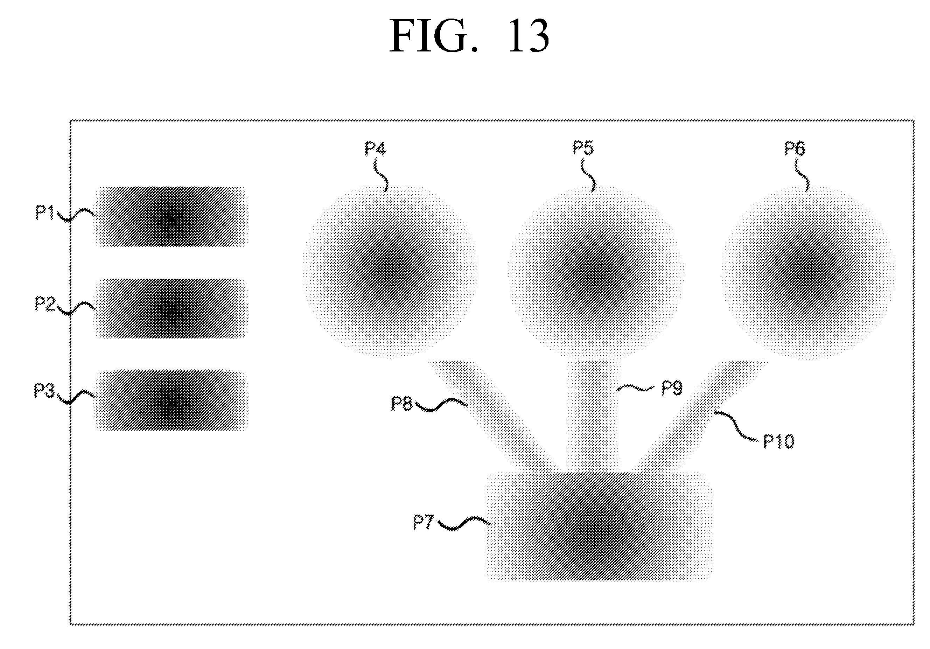

FIG. 13 illustrates distributions of the potential energy P1 to P7 with respect to the plurality of GUI-components C1 to C7 shown in FIG. 12. In FIG. 13, the potential energy is low where brightness is low (black color) and is high where the brightness is high (white color).

Accordingly, it can be seen that the pointer P which enters the GUI-components C1 to C7 automatically moves toward the center of the GUI-components C1 to C7. That is, the GUI-components C1 to C7 are of the same type as that of FIG. 1.

FIG. 13 also illustrates distributions of the potential energy with respect to connecting passages P8 to P10 which are not shown in FIG. 12. The connecting passages are not visible to the user as shown in FIG. 12 but can be dealt as a GUI-component because they constitute the GUI.

Referring to the distributions P8 to P10 of the potential energy in the connecting passages, it can be seen that the pointer P which escapes from the center line of the connecting passage automatically returns to the center line of the connecting passage. That is, the connecting passages are GUI-components of the same type as that of FIG. 8.

More specifically, the connecting passages facilitate the user's manipulation to 1) move the pointer P from the GUI-component C7 to the GUI-component C4 or in a reverse direction, 2) move the pointer P from the GUI-component C7 to the GUI-component C5 or in a reverse direction, and 3) move the pointer P from the GUI-component C7 to the GUI-component C6 or in a reverse direction. Since the potential energy along the center line of the connecting passage is lower than that at the other points, the pointer P is induced to move along the center line of the connecting passage.

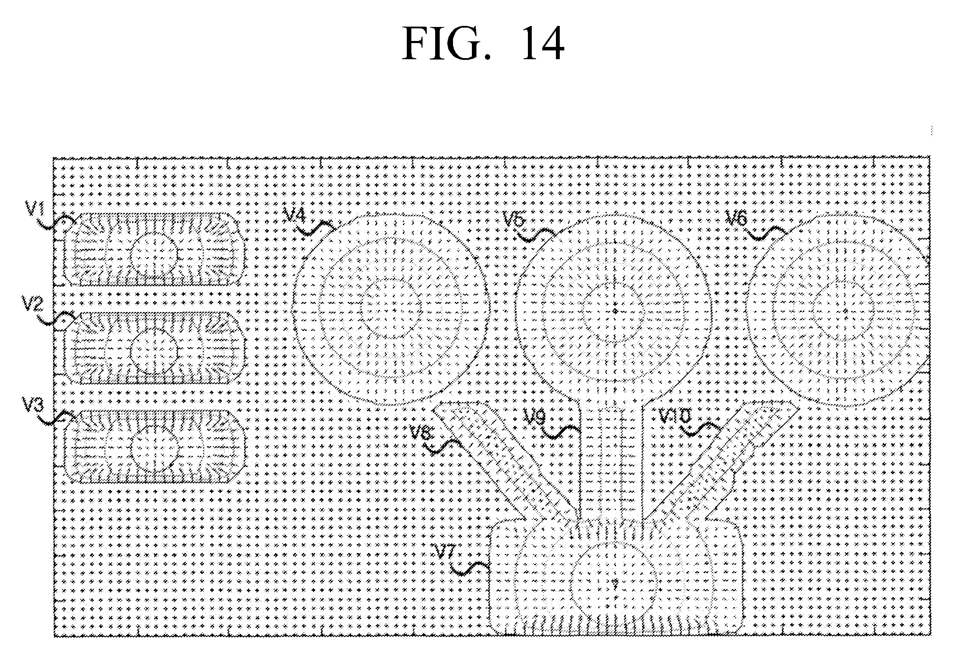

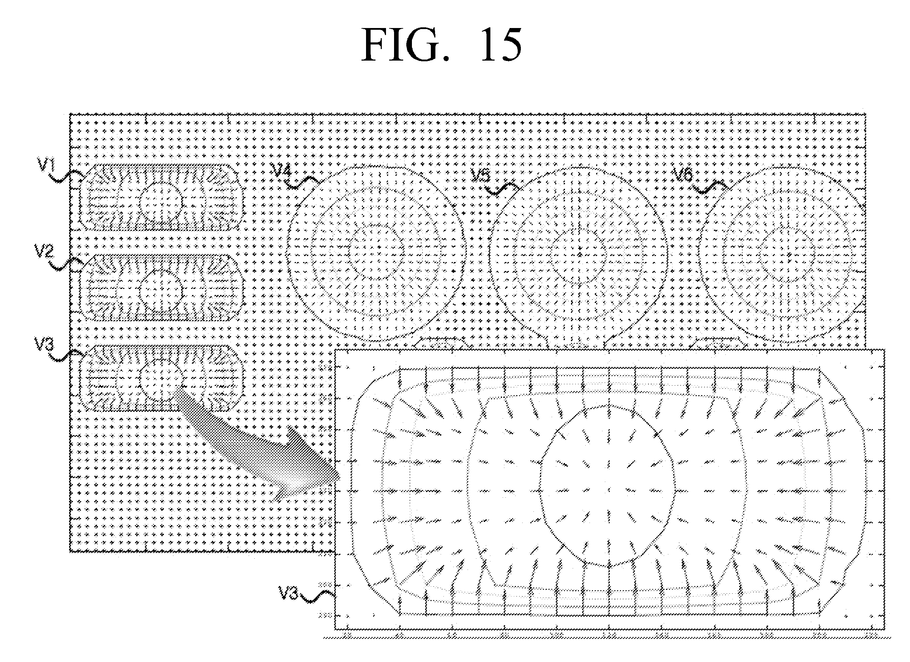

FIG. 14 illustrates distribution of a vector of moving speed of the pointer P which is prepared based on the distribution of the potential energy with respect to the GUI shown in FIG. 13. FIG. 15 is an enlarged view of the distribution of the vector of the moving speed of the pointer P in the GUI-component C3 of FIG. 14.

The distribution of the vector of the moving speed of the pointer P shown in FIGS. 14 and 15 serves as a guideline on how to process the pointer P based on the position of the pointer P if the GUI is designed as shown in FIG. 12. That is, the distribution of the vector of the moving speed of the pointer P shown in FIGS. 14 and 15 is a guideline on whether or not the pointer P is automatically moved to another position based on the position of the pointer P and on how fast the pointer P is moved.

In other words, the distribution of the vector of the moving speed of the pointer P shown in FIGS. 14 and 15 may be a map in which information regarding a position where the pointer P will automatically move is defined for each current position of the pointer P.

The GUI described above is prepared in order shown in FIGS. 12 to 14. Also, controlling the position of the pointer P is performed by referring to the distribution of the vector of the moving speed of the pointer P shown in FIGS. 14 and 15.

Meanwhile, if the pointer P escapes from the GUI-component C as in the case of FIG. 3, the pointer P can move and enter another GUI-component regardless of a user's intention.

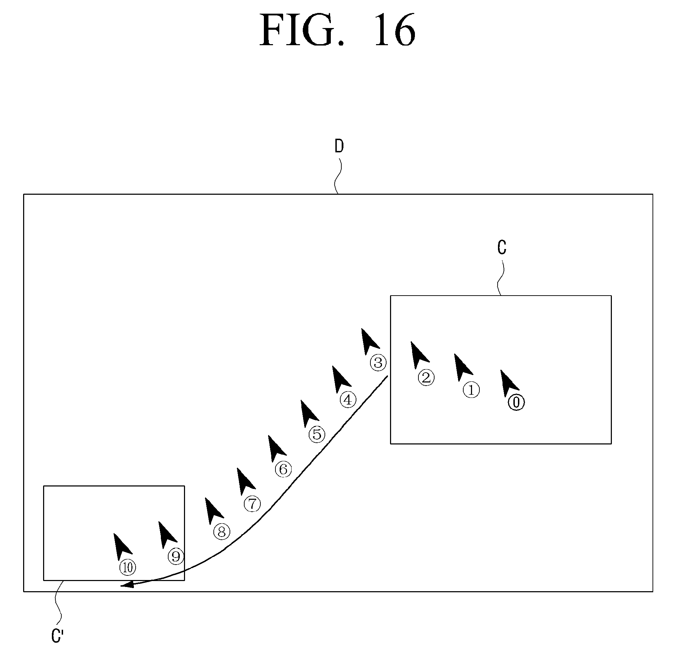

FIG. 16 illustrates a pointer P which escapes from the GUI-component C and automatically moves toward another GUI-component C'.

More specifically, if the pointer P is moved in the sequence of ⓪ → ① → ② → ③ by a user's manipulation and escapes from the GUI-component C, the pointer P automatically moves in the sequence of ③→④→⑤→⑥→⑦→⑧→⑨ →⑩.

That is, as shown in FIG. 16, the pointer P which escapes from the GUI-component C enters another GUI-component C' and is ultimately placed in the center of another GUI-component C'.

In this case, the user only moves the pointer P in the sequence of ⓪→①→②→③. The movement ③→④→⑤→⑥→⑦→ ⑧→⑨→⑩ is automatically achieved without a user's manipulation.

Accordingly, once the pointer P escapes from the GUI-component C, the pointer P enters another GUI-component C' and automatically moves toward the center of the GUI-component C'.

If the pointer P moves toward the center of another GUI-component C' described above, the user feels as if the pointer P automatically moves toward the center of another GUI-component C' by gravity.

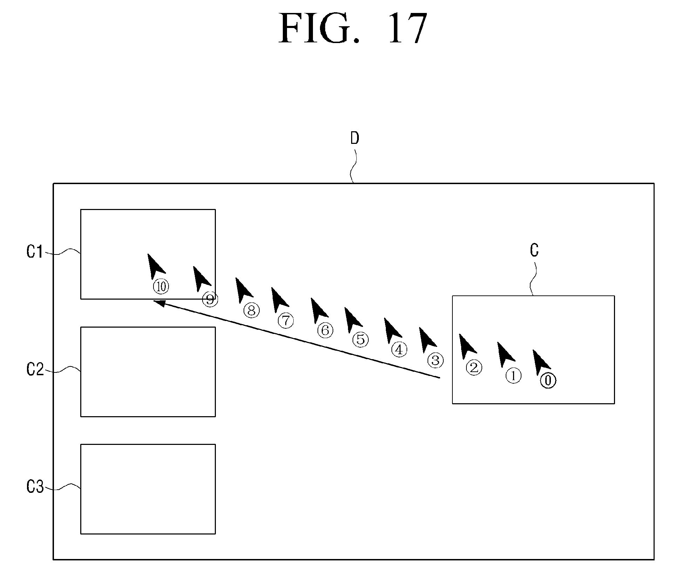

FIG. 17 illustrates a pointer P which escapes from a GUI-component C and moves toward one of other GUI-components C1 C2, C3. More specifically, FIG. 17 illustrates the pointer P which automatically moves and enters the GUI-component C1 which exists in the line extending in the moving direction of the pointer P.

That is, if the pointer P is moved in the sequence of ⓪→①→②→③ by a user's manipulation and escapes from the GUI-component C, the pointer P automatically moves in the sequence of ③→④→⑤→⑥→⑦→⑧→⑨→⑩.

The GUI-component which the pointer P escaping from the GUI-component C enters is determined based on the direction of the pointer P which is moved by a user's manipulation. It is also possible to set the pointer P to move and enter another GUI-component matched with the GUI-component C from which the pointer P escapes.

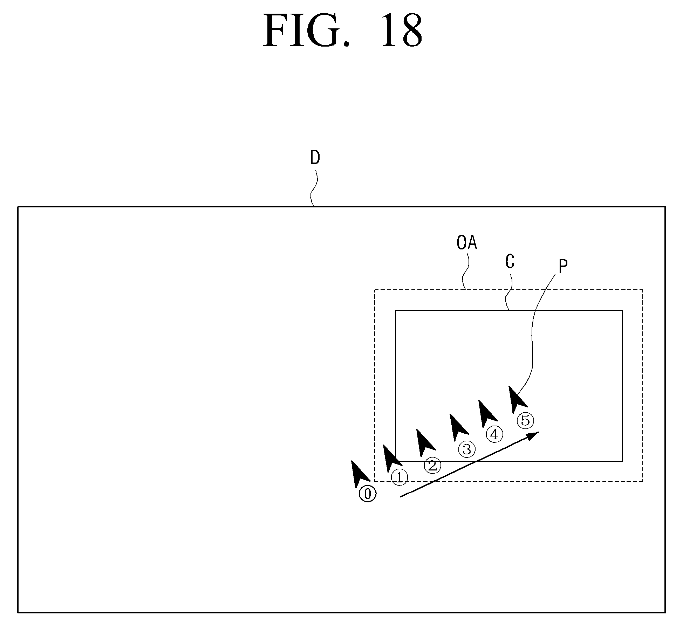

FIG. 18 illustrates a pointer P which is moved under a different condition from that of FIG. 1. More specifically, if the pointer P is moved in the sequence of ⓪ →① by a user's manipulation and enters an outer area OA of the GUI-component C, the pointer P automatically moves in the sequence of ①→②→③→④→⑤.

As in the case of FIG. 1, the pointer P is ultimately placed in the center of the GUI-component C. In this case, the user only moves the pointer P in the sequence of ⓪→①. The movement ①→②→③→④→⑤ is automatically achieved without a user's manipulation.

However, in FIG. 18, if the pointer P enters the outer area OA of the GUI-component C, the pointer P automatically moves toward the center of the GUI-component C.

Hereinafter, the case where the pointer P moves toward the center of the GUI-component C but is ultimately placed around the center rather than in the center of the GUI-component C will be described.

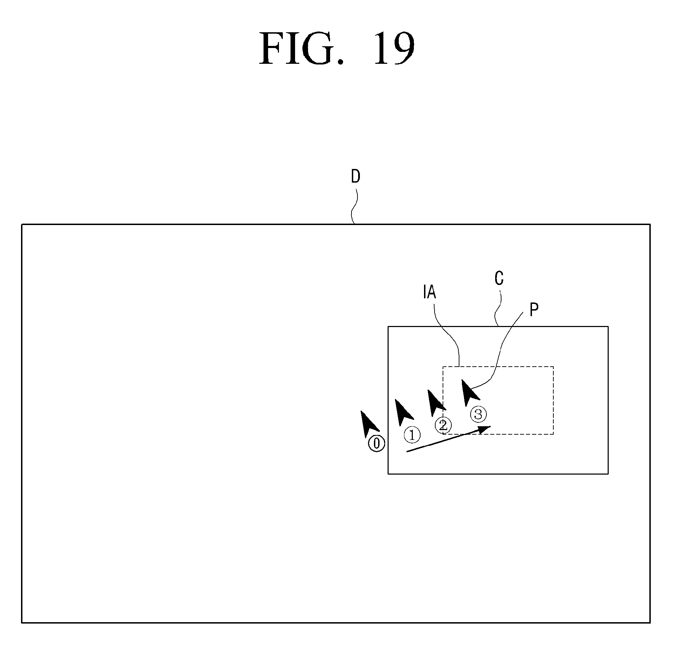

If the pointer P is moved in the sequence of ⓪→① by a user's manipulation and enters the GUI-component C as shown in FIG. 19, the pointer P automatically moves in the sequence of ①→②→③.

Unlike the case of FIG. 1 or 18, the pointer P is ultimately placed in the inner area IA of the GUI-component C in FIG. 19. That is, the pointer P is ultimately placed around the center rather than in the center of the GUI-component C.

In other words, the pointer P moves toward the center of the GUI-component C and stops when the pointer P enters the inner area IA.

It is also possible to set the pointer P to stop at the edge of the inner area IA of the GUI-component C.

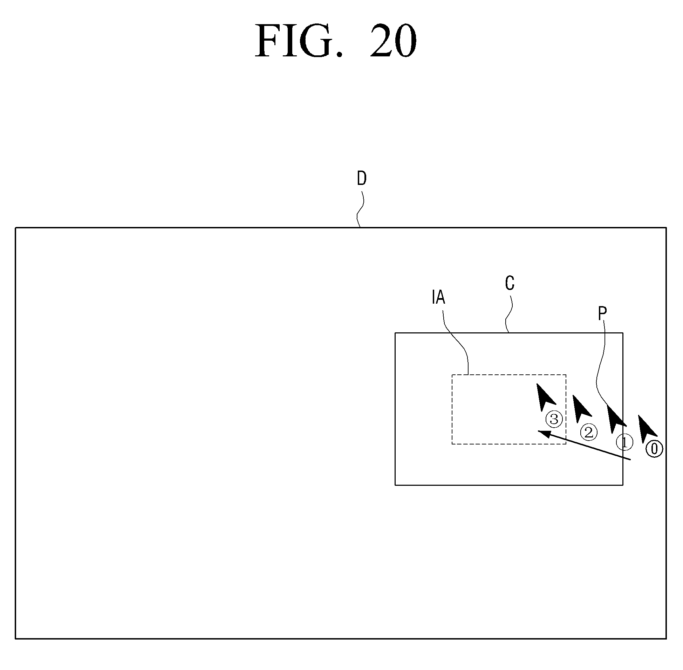

If the pointer P is moved in the sequence of ⓪→① by a user's manipulation and enters the GUI-component C as shown in FIG. 20, the pointer P automatically moves in the sequence of ①→②→③.

The case of FIG. 20 differs from the case of FIG. 19 in the position where the pointer P is ultimately placed. This difference is caused by a difference in the portion of the GUI-component C which the pointer P enters. That is, if the pointer P enters the left side of the GUI-component C as shown in FIG. 19, the pointer P is ultimately placed on the left from the center of the GUI-component C, whereas if the pointer P enters the right side of the GUI-component C as shown in FIG. 20, the pointer P is ultimately placed on the right from the center of the GUI-component C.

That is, the ultimate position of the pointer P is determined according to the moving direction of the pointer P at the time that the pointer P enters the GUI-component C.

In the case of FIGS. 19 and 20, the user only moves the pointer P in the sequence of ⊚→①. The movement ① →②→③ is automatically achieved without a user's manipulation.

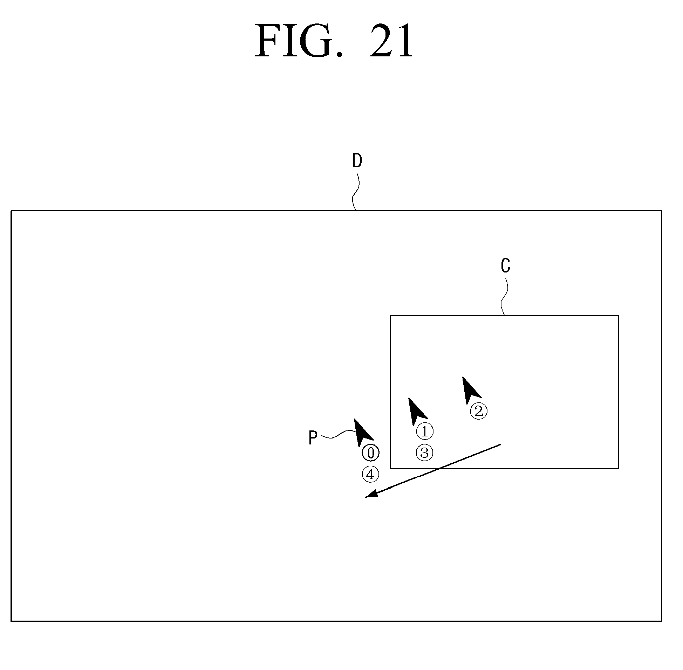

FIG. 21 is a view provided to explain another GUI to which an exemplary embodiment of the present invention can be applied. In FIG. 21, if the pointer P is moved in the sequence of ⓪→①→② by a user's manipulation and enters the GUI-component C, the pointer P automatically moves in the sequence of ②→③→④.

Ultimately, the pointer P is placed outside the GUI-component C. In this case, the user only moves the pointer P in the sequence of ⓪→①→②. The movement ②→③→④ is automatically achieved without a user's manipulation.

That is, once the pointer P enters the GUI-component C, the pointer P automatically moves to the outside of the GUI-component C.

If the pointer P automatically moves to the outside of the GUI-component C, the user feels as if the pointer P automatically moves to the outside of the GUI-component C by antigravity (or repulsive force).

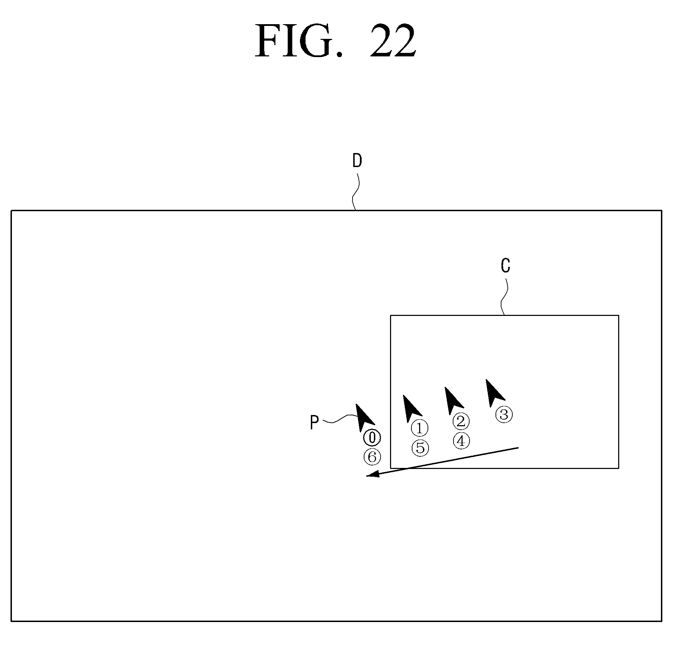

Likewise, if the pointer P is moved in the sequence of ⓪→①→②→③ by a user's manipulation and enters the GUI-component C as shown in FIG. 22, the pointer P automatically moves in the sequence of ③→④→⑤→⑥.

That is, the pointer P is ultimately placed outside the GUI-component C. In this case, the user only moves the pointer P in the sequence of ⓪→①→②→③. The movement ③→④→⑤→⑥ is automatically achieved without a user's manipulation.

Accordingly, if the pointer P enters the GUI-component C, the pointer P automatically moves to the outside of the GUI-component C.

If the pointer P automatically moves to the outside of the GUI-component C, the user feels as if the pointer P automatically moves to the outside of the GUI-component C by antigravity.

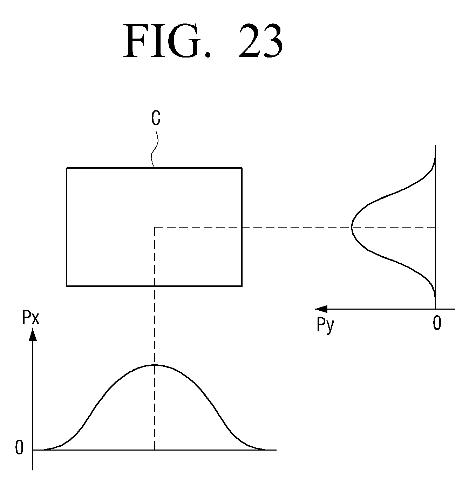

On the assumption that antigravity is exerted from the center of the GUI-component C, the potential energy in/outside the GUI-component C due to the antigravity is distributed as shown in FIG. 23 and the pointer P is moved from a point where the potential energy is high to a point where the potential energy is low.

Referring to FIG. 23, the potential energy in/outside the GUI-component C is lowest at the outside of the GUI-component C and the potential energy for both the x-axis and the y-axis is "0". Accordingly, the pointer P ultimately moves the outside of the GUI-component C where the potential energy is lowest.

The speed of the pointer P which moves to the outside of the GUI-component C is determined according to the distribution of potential energy in/outside the GUI-component C. However, the moving speed of the pointer P does not necessarily correspond to the potential energy in the GUI-component C. That is, the moving speed of the pointer P which moves to the outside of the GUI-component C may be realized in a linear or a non-linear manner.

The GUI-component C appearing on the GUI described above has a rectangular shape, which is a closed shape, and pushes the entering pointer P out of the GUI-component C.

The GUI-component may be applied to an inactivated GUI-component, that is, a GUI-component that cannot be selected by the user with the pointer P.

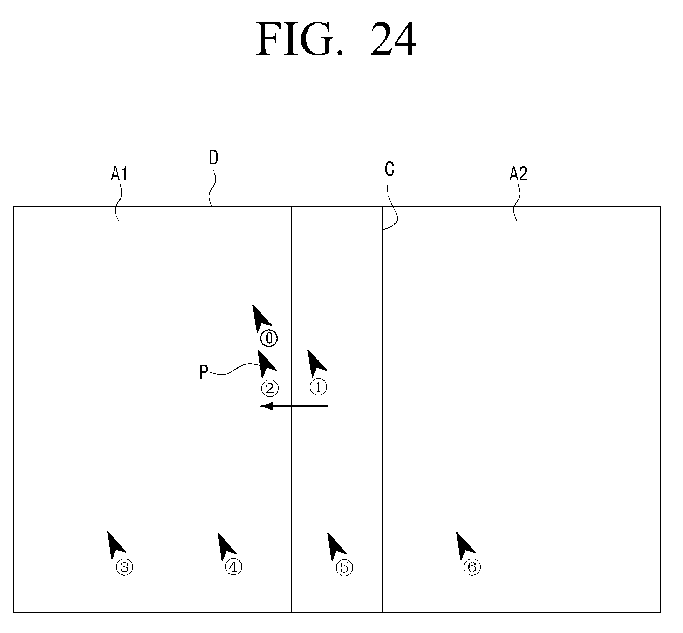

FIG. 24 illustrates a display D on which a GUI having a GUI-component C of a different type from that of FIG. 21. FIG. 24 illustrates the movement of the pointer P when the pointer P enters the GUI-component C by a user's manipulation. More specifically, FIG. 24 illustrates a GUI which makes it difficult for the pointer P to move between areas A1 and A2 which are separated by the GUI-component C.

If the pointer P on the upper part of FIG. 24 is moved in the sequence of ⓪→① by a user's manipulation and enters the GUI-component C, the pointer P automatically moves in the sequence of ①→②. That is, the pointer P which stays in the area Alis not moved to the area A2 and still stays in the area A1

The pointer P on the lower part of FIG. 24 is moved in the sequence of ③→④→⑤→⑥ by a user's manipulation and ultimately passes through the GUI-component C. That is, the pointer P which stays in the area A1 is moved to the area A2.

That is, in the case illustrated on the upper part of FIG. 24, since the degree of the user's manipulation to let the pointer P pass through the GUI-component C is small (the degree of the user's manipulation is less than a threshold), the pointer P does not pass through the GUI-component C. Also, in the case illustrated on the lower part of FIG. 24, since the degree of the user's manipulation to let the pointer P pass through the GUI-component C is great (the degree of the user's manipulation is greater than a threshold), the pointer P passes through the GUI-component C.

If the user encounters the situation of FIG. 24 in manipulating the pointer P, the user feels as if the antigravity is exerted from the center line of the GUI-component C and makes it difficult to let the pointer P pass through the GUI-component C.

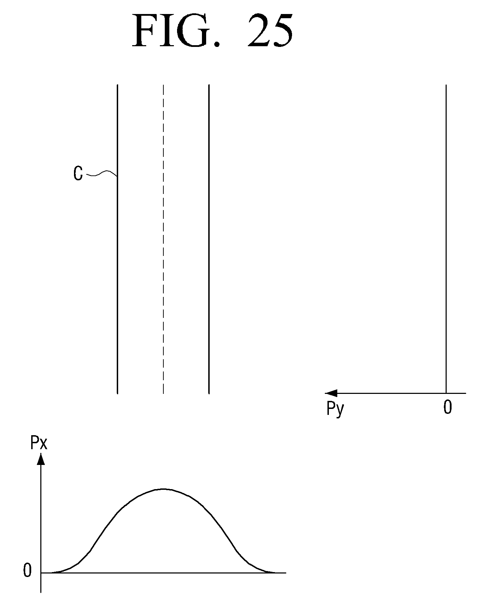

On the assumption that the antigravity is exerted from the center line of the GUI-component C, the potential energy in the GUI-component C due to the antigravity is distributed as shown in FIG. 25 and the pointer P is moved from a point where the potential energy is high and to a point where the potential energy is low.

As shown in FIG. 25, the potential energy with respect to the y-axis in the GUI-component is "0" over all points. Also, the potential energy with respect to the x-axis in the GUI-component C is lowest at the outside of the GUI-component C and is "0". Accordingly, the pointer P ultimately moves to the outside of the GUI-component C where the potential energy is lowest.

The speed of the pointer P which is pushed out when entering the GUI-component C is determined according to the distribution of the potential energy in the GUI-component C. However, the moving speed of the pointer P does not necessary correspond to the distribution of the potential energy in the GUI-component C. That is, the moving speed of the pointer P which is pushed out when entering the GUI-component C may be realized in a linear or non linear manner.

The GUI-component C described up to now is of a straight band shape and pushes out the pointer P which tries to enter the GUI-component C to separate the areas of the display D.

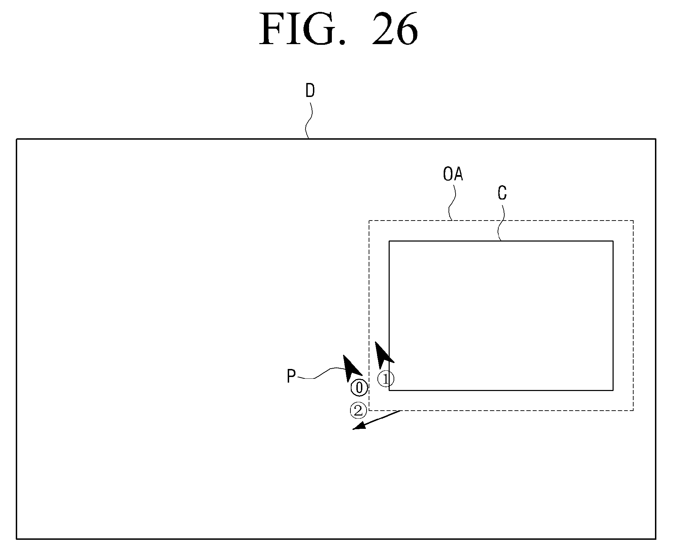

FIG. 26 illustrates a pointer P which is moved under a different condition from that of FIG. 21. More specifically, in FIG. 26, if the pointer P is moved in the sequence of ⓪→① by a user's manipulation and enters an outer area OA of a GUI-component C, the pointer P moves in the sequence of ①→②.

As in FIG. 21, the pointer P of FIG 26 is ultimately placed outside the GUI-component C. In this case, the user only moves the pointer P in the sequence of ⓪→①. The movement ①→② is automatically achieved without a user's manipulation.

However, unlike in FIG. 21, in FIG. 26, if the pointer P enters the outer area OA of the GUI-component C, the pointer P automatically moves to the outside of the GUI-component C.

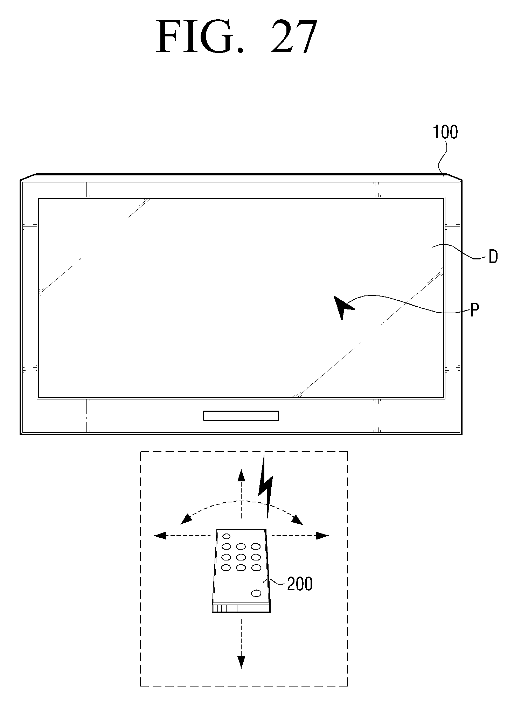

The GUI described up to now can be applied to a broadcast receiving system and FIG. 27 illustrates a broadcast receiving system to which the above-described GUI can be applied. As shown in FIG. 27, the broadcast receiving system comprises a digital television (DTV) 100 which is a broadcast receiver and a remote controller 200 which is a user-input device. It should be noted that while the following exemplary embodiment describes a DTV, the present invention is not limited thereto, and can be equally applied to other types of display devices. Further, while the following exemplary embodiment describes a broadcast receiving system the present invention is not limited thereto, and can be equally applied to other types of display device/remote control systems.

The DTV 100 provides a broadcast received in a wire or wireless manner to the user through a display D. Also, the DTV 100 provides the user with not only an external input received from an external device connected to the DTV 10 in a wire or wireless manner, but also a file stored in an embedded storage medium or a storage medium connected to the DTV 100.

The remote controller 200 transmits a user's manipulation to the DTV 100 and the DTV 100 performs a function corresponding to the user's manipulation. Also, the remote controller may serve as a pointing device, which will be described in detail below.

The front face of the remote controller 200 is movable in the directions indicated by the dotted arrows of FIG. 27 by the user. The front face of the remote controller 200 is movable in an upward direction, a downward direction, a leftward direction, a rightward direction, or in a direction combining the aforementioned directions (e.g., in a north-west direction). The front face of the remote controller 200 is movable in all directions.

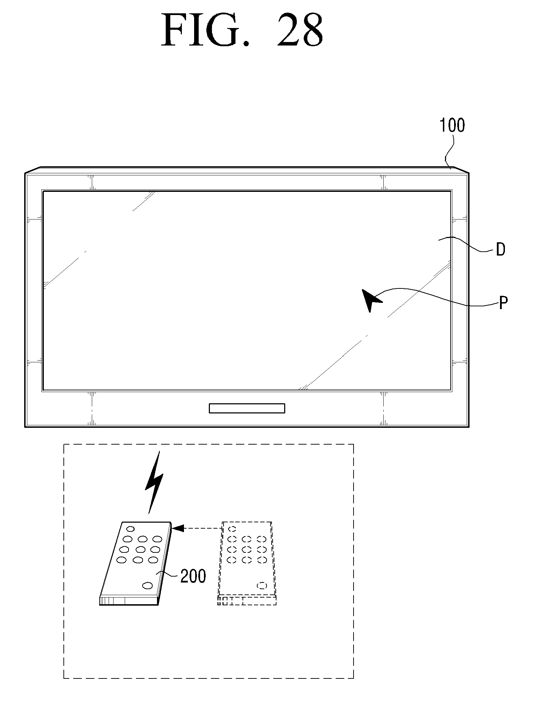

For example, the front face of the remote controller 200 moves while drawing a trajectory on a virtual plane parallel to the screen of the display D. In FIG. 28, the front face of the remote controller 200 is moved in a leftward direction while drawing a trajectory on the virtual plane parallel to the screen of the display D.

The virtual plane may not be completely parallel to the screen of the display D, and also the virtual plane may not be completely planar. This is because, in reality, it may be impossible to move the front face of the remote controller 200 on a plane which is completely planar and completely parallel to the screen of the display D.

Therefore, an exemplary embodiment of the present invention can be applied to the case where the front face of the remote controller 200 moves on an incomplete plane which is not completely parallel to the screen of the display D.

The user may move the front face of the remote controller 200 by turning only his/her wrist with the arm holding the remote controller being fixed.

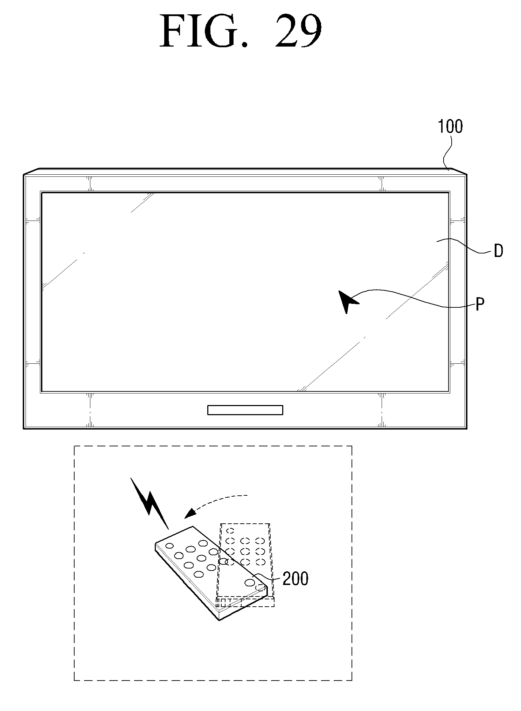

That is, if the user moves his/her wrist upward, downward, leftward, rightward, or in direction combining the aforementioned directions (e.g., in a north-west direction), the front face of the remote controller 200 is moved upward, downward, leftward, rightward, or in a direction combining the aforementioned directions (e.g., in a north-west direction) while drawing a curved trajectory on a virtual hemisphere. In FIG. 29, the front face of the remote controller 200 is moved leftward by the user while drawing a curved trajectory on the virtual hemisphere.

The virtual hemisphere on which the front face of the remote controller 200 is moved by turning the user's wrist may not be a mathematically complete hemisphere. This is because, in reality, it is impossible to move the front face of the remote controller 200 by turning the user's wrist while drawing a trajectory on the mathematically complete hemisphere.

Accordingly, an exemplary embodiment of the present invention can be applied to the case where the front face of the remote controller 200 is moved while drawing a curved trajectory on a somewhat incomplete hemisphere rather than a mathematically complete hemisphere.

Briefly, the pointer P displayed on the display D is moved following the movement of the remote controller 200 by the user in the space. The movement of the front face of the remote controller 200 in the space is distinguished from the movement of a PC mouse on a bottom.

If the front face of the remote controller 200 is moved in the space, the pointer P displayed on the display D is moved in the same direction as the direction in which the front face of the remote controller 200 is moved. For example, i) if the user moves the front face of the remote controller 200 upwardly in the space, the pointer P moves upwardly, and ii) if the user moves the front face of the remote controller 200 in the north-west direction in the space, the pointer P moves in the north-west direction.

Accordingly, the remote controller 200 may serve as a pointing device used for moving the pointer P on the display D.

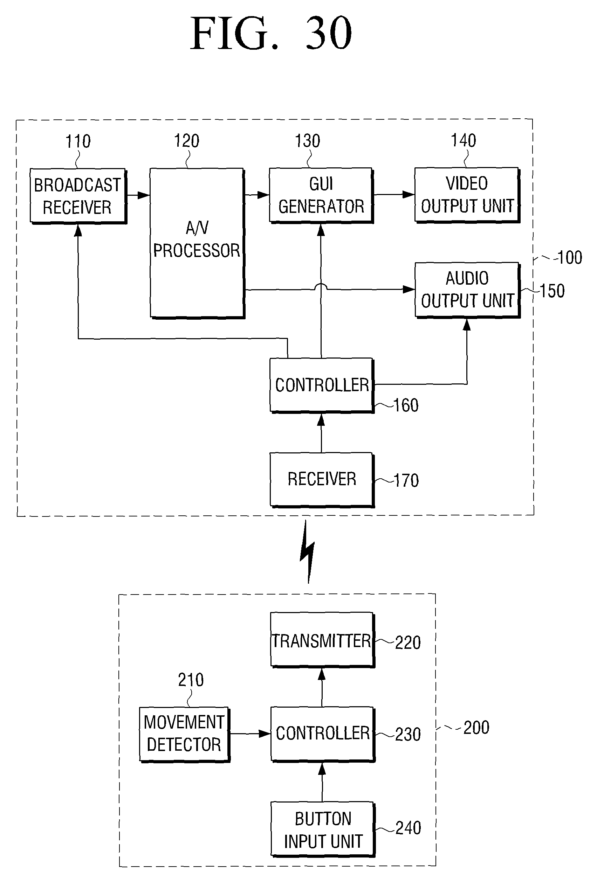

Hereinafter, the DTV 100 and the remote controller 200 will be described with reference to FIG. 30. FIG. 30 is a detailed block diagram illustrating the DTV 100 and the remote controller 200.

As shown in FIG. 30, the remote controller 200 comprises a movement detector 210, a transmitter 220, a controller 230 and a button input unit 240.

The movement detector 210 detects the movement of the front face of the remote controller 200 by the user and transmits a result of detection to the controller 230. The movement detector 210 may be a 2D gyro sensor for example.

The button input unit 240 is provided with a power button, a channel button, a volume button, and a selection button.

The controller 230 transmits information on the movement which is obtained based on the result of detection transmitted from the movement detector 210, such as a moving direction or a moving distance, to the DTV 100 through the transmitter 220. Also, the controller 230 transmits information regarding a button pressed by the user through the button input unit 240 to the DTV 100 through the transmitter 220.

As shown in FIG. 30, the DTV 100 comprises a broadcast receiver 110, an audio/video (AV) processor 120, a GUI generator 130, a video output unit 140, an audio output unit 150, a controller 160, and a receiver 170.

The broadcast receiver 110 receives a broadcast from a broadcasting station or a satellite in a wire or wireless manner and tunes to the broadcast.

The A/V processor 120 performs signal-processing such as video decoding, video scaling, and audio decoding with respect to the broadcast output from the broadcast receiver 110. The A/V processor 120 transmits video signals to the GUI-generator 130 and audio signals to the audio output unit 150.

The GUI generator 130 generates the GUI described above and adds the GUI to the image output from the A/V processor 120.

The video output unit 140 displays the image with the GUI which is output from the GUI generator 130 on the display D or outputs the image to an external device (e.g., external TV) connected to the DTV through an external output terminal (not shown).

The audio output unit 150 outputs an audio output from the A/V processor 120 through a speaker or to the external device connected to the DTV through the external output terminal.

The controller 160 grasps a user command based on information on the user's manipulation transmitted from the remote controller 200 through the receiver 170, such as information on the movement of the front face of the remote controller 200 or on the pressed button, and controls the entire operation of the DTV 100 according to the user command.

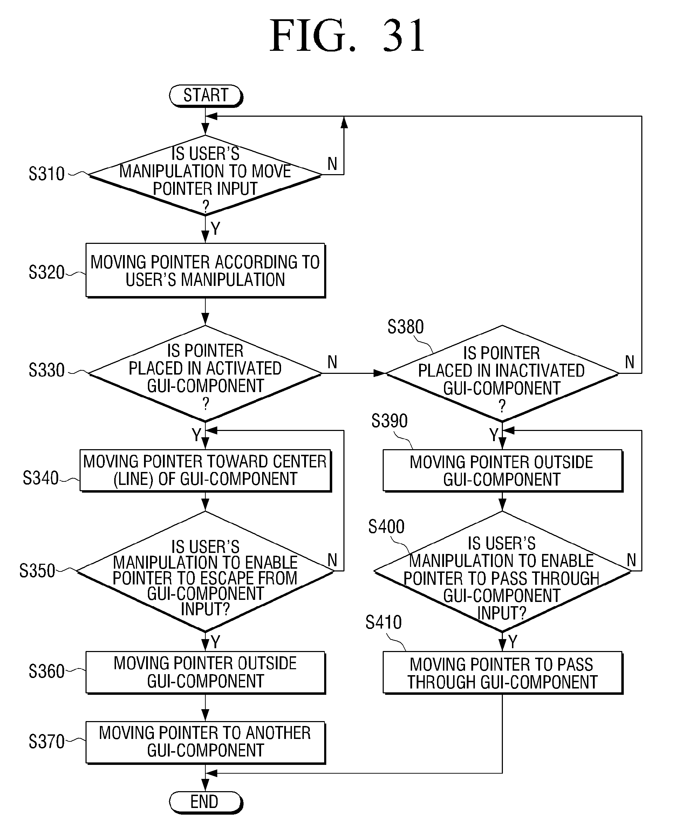

In particular, the controller 160 grasps information on the movement of the front face of the remote controller 200 received through the receiver 170 and controls the GUI generator 130 to move the pointer P appearing on the GUI based on the movement information. Detailed description will be provided below with reference to FIG. 31.

FIG. 31 is a flowchart illustrating a method for providing a GUI using a pointer having a visual effect showing that the pointer is moved by gravity.

As shown in FIG. 31, if a user's manipulation to move the pointer P is input using the remote controller 200 (S310-Y), the controller 160 controls the GUI generator 130 to move the pointer P according to the user's manipulation (S320).

The a user's manipulation to move the pointer P in operation S310 refers to manipulation to move the front face of the remote controller 200. In operation S320, the controller 160 determines a position where the pointer P will be moved based on information on the movement of the front face of the remote controller 200 received from the receiver 170 and controls the GUI generator 130 to move the pointer P to the determined position.

If the pointer P is placed in an activated GUI-component C as a result of movement (S330-Y), the controller 160 controls the GUI-generator 130 to move the pointer P toward the center (line) of the activated GUI-component C (S340).

The activated GUI-component C recited herein refers to a GUI-component C shown in FIG. 1, 8, or 11. If the activated GUI-component C is the GUI component shown in FIG. 1, the pointer P moves toward the center of the GUI-component C in operation S340. If the activated GUI-component C is the GUI-component C shown in FIG. 8 or 1, the pointer P moves toward the center line of the GUI-component C in operation S340.

After that, if a user's manipulation to enable the pointer P to escape from the GUI-component C is input using the remote controller 200 (S350-Y), the controller 160 controls the GUI generator 130 to move the pointer P outside the GUI-component C (S360).

The a user's manipulation to enable the pointer P to escape from the GUI-component C refers to a user's manipulation to move the pointer P in the sequence of ⓪→①→ ②→③ as in FIG. 3. That is, in this case, the degree of a user's manipulation to move the pointer P outside the GUI-component C is greater than a threshold.

After that, the controller 160 controls the GUI generator 130 to move the pointer P to another GUI-component (S370). The operation S370 corresponds to the process shown in FIG. 16 or 17. The operation S370 may be omitted if necessary.

On the other hand, if the user's manipulation to enable the pointer P to escape from the GUI-component C is not input using the remote controller 200 (S350-N), the controller 160 controls the GUI generator 130 to move the pointer P toward the center (line) of the GUI-component C (S340). This operation corresponds to the process shown FIGS. 2 or 8.

If the pointer P is placed in an inactivated GUI-component C as a result of movement in operation S320 (S330-N & S380-Y), the controller 160 controls the GUI generator 140 to move the pointer P outside the inactivated GUI-component C (S390).

The inactivated GUI-component D refers to the GUI component C shown in FIG. 21 and the GUI-component C shown in FIG. 24.

After that, if a user's manipulation to enable the pointer P to pass through the GUI-component C is input using the remote controller 200 (S400-Y), the controller 160 controls the GUI generator 130 to let the pointer P pass through the GUI-component C (S410).

The a user's manipulation to enable the pointer P to pass through the GUI-component C refers to a user's manipulation to move the pointer P in the sequence of ③→④→ ⑤→⑥ as shown on the lower part of FIG. 24. That is, in this case, the degree of a user's manipulation to let the pointer P pass through the GUI-component C is greater than a threshold.

On the other hand, if the user's manipulation to enable the pointer P to pass through the GUI-component C is not input using the remote controller 200 (S400-N), the controller 160 controls the GUI generator 130 to move the pointer P outside the inactivated GUI-component C (S390). This operation corresponds to the process illustrated in FIG. 21, 22 or the upper part of FIG. 24.

If the pointer P is neither placed in the activated GUI component C nor the inactivated GUI component C as a result of movement in operation S320 (S330-N or S380-N), the pointer P does not automatically move and operation S310 resumes. For example, if the pointer P is placed on the background portion of the GUI, the pointer P is moved only according to a user's manipulation.

Up to now, an exemplary embodiment of the present invention was described in detail.

In this embodiment, the GUI-component is of a rectangular or band shape, but this is merely an example. The GUI-component may be realized in any other shape.

Also, the pointer P is set to automatically move toward the center line of the band in FIGS. 8 and 11. However, the pointer P may be set to automatically move in the center area rather than the center line. The concept and detailed description thereof is omitted because it can be inferred from the description of FIGS. 19 and 20.

Likewise, in FIG. 24, the pointer P may be realized such that the areas are separated by the center area rather than the center line.

If the user's manipulation to move the pointer P toward the center of the GUI-component C is added at the time that the pointer P enters the GUI-component C and automatically moves toward the center of the GUI-component C, it is possible to set the speed of the pointer P which moves toward the center of the GUI-component C to increase.

On the other hand, when the pointer P enters the GUI-component C and automatically moves toward the center of the GUI-component C, if a user's manipulation to let the pointer P escape from the center of the GUI-component C is added but if the degree of the user's manipulation is small (that is, less than a threshold), it is possible to set the speed of the pointer P which moves toward the GUI-component C to decrease.

On the other hand, when the pointer P enters the GUI-component and automatically moves toward the center of the GUI-component, if a user's manipulation to let the pointer escape from the center of the GUI-component C is added and the degree of the user's manipulation is great (that is, greater than a threshold), the pointer P may move outside the GUI-component C according to the user's manipulation.

Likewise, when the pointer P is pushed out of the GUI-component C, if a user's manipulation to move the pointer P outside the GUI-component C is added, it is possible to set the speed of the pointer P which is pushed out of the GUI-component C to increase.

Also, when the pointer P is pushed out of the GUI-component C, if a user's manipulation to prevent the pointer P from being pushed out of the GUI-component is added but the degree of the user's manipulation is small (that is, less than a threshold), it is possible to set the speed of the pointer P which is pushed out of the GUI-component C to decrease.

If the pointer P is placed on a position where the GUI-component C does not appear, the GUI described up to now moves the pointer P according to the user's manipulation, but if the pointer P is placed on the area except of the GUI-component C, the GUI automatically moves the pointer P to another position different from the current position.

In the latter case, the pointer P is set to have a visual effect showing that the pointer P is moved by gravity. However, since gravity is merely an example of a force having the visual effect showing that gravity is exerted to the pointer P, another force may be used in place of gravity. Magnetic force and electric force may be used as a force having such a visual effect.

Also, in this embodiment, an additional process is performed depending on whether the pointer enters the GUI-component C or not, but this is merely an example for the convenience of explanation. If it is satisfied that the pointer P is moved according to only the user's manipulation or is automatically moved based on the position of the pointer P, the technical idea of an exemplary embodiment of the present invention can be applied to other cases different from the above case.

Although a DTV is explained as a broadcast receiving apparatus in the above exemplary embodiment, another exemplary embodiment of the present invention can be applied to any other broadcast receiving apparatus. For example, the broadcast receiving apparatus may include a set-top box (STB), a digital multimedia broadcast (DMB) receiving apparatus, and a portable device having a broadcast receiving module embedded therein for performing a broadcast receiving function (e.g., a mobile phone having a DMB receiving module embedded therein). In the case of a portable device, it is possible to use a touch pad in place of a remote controller to move the pointer P.

An exemplary embodiment of the present invention can be applied to any electronic apparatus that can provide a GUI through a display. The remote controller to move the pointer P is replaceable with a touch pad, a mouse, or a button input device according to the type of electronic apparatus.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A method for providing a graphical user interface (GUI), the method comprising:
displaying a GUI-component and a pointer for indicating the GUI-component; and
if the pointer enters the GUI-component, moving the pointer regardless of user's intention.

2. The method as claimed in claim 1, wherein the moving operation comprises, if the pointer enters the GUI-component, moving the pointer toward a predetermined position of the GUI-component.

3. The method as claimed in claim 2, further comprising, if the pointer enters an outer area of the GUI-component, moving the pointer toward the predetermined position of the GUI-component.

4. The method as claimed in claim 2 or 3, wherein the GUI-component is of a closed shape and is selected by indicating the GUI-component with the pointer.

5. The method as claimed in claim 2 or 3, wherein the GUI-component is of a band shape and the predetermined position is one of a center line and a center area of the band shape.

6. The method as claimed in any one of claims 2 to 5, wherein the moving operation includes moving the pointer toward the predetermined position of the GUI-component with a varying of a moving speed of the pointer.

7. The method as claimed in any one of claims 2 to 6, further comprising:
determining whether there is a user's manipulation to let the pointer escape from the predetermined position;
if it is determined that there is the user's manipulation, determining a degree of the user's manipulation; and
if the degree of the user's manipulation is greater than a threshold, moving the pointer according to the user's manipulation and moving the pointer outside of the GUI-component.

8. The method as claimed in claim 7, further comprising, if the pointer escapes from the GUI-component, moving the pointer toward a target GUI-component.

9. The method as claimed in claim 1, wherein, if the pointer enters the GUI-component, the moving operation includes moving the pointer outside of the GUI-component.

10. The method as claimed in claim 9, further comprising, if the pointer enters an outer area of the GUI-component, moving the pointer outside of the GUI-component.

11. The method as claimed in claim 9 or 10, wherein the GUI-component is of a closed shape and is not selected by indicating the GUI-component with the pointer.

12. The method as claimed in claim 9 or 10, wherein the GUI-component is of a band shape and is separated by one of a center line and a center area of the band shape.

13. The method as claimed in any one of claims 9 to 12, further comprising:
determining whether there is a user's manipulation to let the pointer pass through the GUI-component;
if it is determined that there is the user's manipulation, determining a degree of the user's manipulation; and
if the degree of the user's manipulation is greater than a threshold, moving the pointer to pass through the GUI-component.

14. The method as claimed in any one of claims 1 to 13, wherein the moving operation includes moving the pointer with reference to a map in which information about a position to which the pointer automatically moves regardless of user's intention is defined for each current position of the pointer.

15. An electronic apparatus which execute the method for providing the GUI as claimed in any one of claims 1 to 14.

## Amended claims

### Amended claims in accordance with Rule 137(2) EPC.

**1.** A method for providing a graphical user interface (GUI), the method comprising:
displaying a GUI-component and a pointer for indicating the GUI-component;
moving the pointer according to a user's manipulation (S310, S320); and
if the pointer enters the GUI-component, moving the pointer regardless of user's intention (S340).

**2.** The method as claimed in claim 1, wherein the moving operation comprises, if the pointer enters the GUI-component, moving the pointer toward a predetermined position of the GUI-component.

**3.** The method as claimed in claim 2, further comprising, if the pointer enters an outer area (OA) of the GUI-component, moving the pointer toward the predetermined position of the GUI-component.

**4.** The method as claimed in claim 2 or 3, wherein the GUI-component is of a closed shape and is selected by indicating the GUI-component with the pointer.

**5.** The method as claimed in claim 2 or 3, wherein the GUI-component is of a band shape and the predetermined position is one of a center line and a center area of the band shape.

**6.** The method as claimed in any one of claims 2 to 5, wherein the moving operation includes moving the pointer toward the predetermined position of the GUI-component with a varying of a moving speed of the pointer.

**7.** The method as claimed in any one of claims 2 to 6, further comprising:
determining whether there is a user's manipulation to let the pointer escape from the predetermined position (S350);
if it is determined that there is the user's manipulation, determining a degree of the user's manipulation; and
if the degree of the user's manipulation is greater than a threshold, moving the pointer according to the user's manipulation and moving the pointer outside of the GUI-component (S360).

**8.** The method as claimed in claim 7, further comprising, if the pointer escapes from the GUI-component, moving the pointer toward a target GUI-component (S370).

**9.** The method as claimed in claim 1, wherein, if the pointer enters the GUI-component, the moving operation includes moving the pointer outside of the GUI-component.

**10.** The method as claimed in claim 9, further comprising, if the pointer enters an outer area of the GUI-component, moving the pointer outside of the GUI-component.

**11.** The method as claimed in claim 9 or 10, wherein the GUI-component is of a closed shape and is not selected by indicating the GUI-component with the pointer.

**12.** The method as claimed in claim 9 or 10, wherein the GUI-component is of a band shape and is separated by one of a center line and a center area of the band shape.

**13.** The method as claimed in any one of claims 9 to 12, further comprising:
determining whether there is a user's manipulation to let the pointer pass through the GUI-component (S400);
if it is determined that there is the user's manipulation, determining a degree of the user's manipulation; and
if the degree of the user's manipulation is greater than a threshold, moving the pointer to pass through the GUI-component (S410).

**14.** The method as claimed in any one of claims 1 to 13, wherein the moving operation includes moving the pointer with reference to a map in which information about a position to which the pointer automatically moves regardless of user's intention is defined for each current position of the pointer.

**15.** An electronic apparatus which execute the method for providing the GUI as claimed in any one of claims 1 to 14.
